# EUROPEAN PATENT APPLICATION

(11) **EP 4 099 623 A1**
(43) Date of publication of application: **07.12.2022**
(21) Application number: 22175859.2
(22) Date of filing: 27.05.2022
(51) Int. Cl.: H04L 9/40

(54) **A SYSTEM AND METHOD FOR FEATURE SELECTION RECOMMENDATION**

(30) Priority: 01.06.2021 US 202163195321 P
(71) Applicant: Saferide Technologies Ltd., 6971901 Tel-Aviv (IL)
(72) Inventor: BAKALO, Ran, Haifa 3497031 (IL); APARTSIN, Alexander, Rehovot 7630235 (IL); STEIN, Yehiel, Ramat Hasharon 4700802 (IL); VARDI, Yossi, Tel Aviv 6908637 (IL)
(74) Representative: Studio Torta S.p.A.

(57) **Abstract**

A feature selection recommendation system, the feature selection recommendation system comprising a processing circuitry configured to: obtain: (a) a training data-set, the training data-set comprising a plurality of records, each record including a collection of features describing a given allowed state of a physical entity, and (b) a selection of one or more selected features of the features; generate, using a causality discovery model, for a plurality of pairs of the features of the training data-set, a respective causality score, the causality score being indicative of an influence between the features of the respective pair; identify additional recommended features, being one or more features that comply with a recommendation condition based on the plurality of pairs and the causality scores generated for the pairs; and provide a user of the feature selection recommendation system with an indication of the additional recommended features.

## Description

### TECHNICAL FIELD

The invention relates to a system and method for feature selection recommendation.

### BACKGROUND

Signals represent data as a sequence of discrete or continuous values that at any given time can take on one of a finite number of values or can represent a real number within a continuous range of values. Over time these signals form a time series of values. In some cases, the signals originate from a system or read from the system and represent features of the system. The features are associated with the signals produced by the system (for example: by direct mapping of the signals or any other transformation of the signals), and can be utilized as into inputs of a machine learning system. The system can be any arrangement, structure, method or technique that is a data source that has features that can be read from outside the system. A non-limiting example is a computer system in which a mechanism is controlled or monitored by computer-based algorithms. Another relevant non-limiting example are Cyber-Physical Systems (CPSs), which have physical and software components are deeply intertwined, able to operate on different spatial and temporal scales, exhibit multiple and distinct behavioral modalities, and interact with each other in ways that change with context. The signals read from the system represent the values of one or more variables describing a given allowed state of the system.

Machine learning models can be used to analyze and monitor signals from the system in order to achieve various tasks, and specifically for signal integrity monitoring tasks by performing anomaly detection on the signals read from the system. Anomaly detection requires monitoring relevant signals read from the system wherein the challenge is selecting the features representing the signals to monitor. A non-limiting example of signal integrity monitoring is a problem in the domain of Vehicle Health Monitoring (VHM). In VHM, abnormal vehicle behavior is detected and diagnosed by detecting anomalies in observed signal (for example: by looking for unusual combination of signals and their temporal behavior).

Current machine learning anomaly detection solutions require either automatic selection or manual selection of the features, based for example on domain experts, representing the signals from which to learn the normal behavior of the system. As a system can have a large number of signals, the selection of the signals to monitor can be cumbersome and prone to omittance. Current anomaly detection solutions of time series of signals do not utilize causality relations between the signals in order to select the signals of the system to monitor. There is thus a need in the art for a new system and method for feature selection recommendation.

### GENERAL DESCRIPTION

In accordance with a first aspect of the presently disclosed subject matter, there is provided a feature selection recommendation system, the feature selection recommendation system comprising a processing circuitry configured to: obtain: (a) a training data-set, the training data-set comprising a plurality of records, each record including a collection of features describing a given allowed state of a physical entity, and (b) a selection of one or more selected features of the features; generate, using a causality discovery model, for a plurality of pairs of the features of the training data-set, a respective causality score, the causality score being indicative of an influence between the features of the respective pair; identify additional recommended features, being one or more features that comply with a recommendation condition based on the plurality of pairs and the causality scores generated for the pairs; and provide a user of the feature selection recommendation system with an indication of the additional recommended features.

In some cases, the recommendation condition is one of: (A) that the additional recommended features are: (i) not one of the selected features, (ii) part of at least one given pair of the pairs wherein a first feature of the given pair is one of the selected features, and (iii) the causality score of the given pair is above a first threshold, (B) that the additional recommended features are: (i) not one of the selected features, (ii) part of two or more given pairs of the pairs wherein a first feature of the given pair is one of the selected features, (iii) the number of pairs of the given pairs having a causality score above a second threshold is above a third threshold, or (C) that the additional recommended features are: (i) not one of the selected features, (ii) part of two or more given pairs of the pairs wherein a first feature of the given pair is one of the selected features, (iii) the sum of the causality scores associated with pairs of the given pairs having a causality score above a fourth threshold is above a fifth threshold.

In some cases, the user selects the selected features.

In some cases, the training data-set is used to train an anomaly detection model capable of detecting one or more anomalous records within a series of input records, wherein each of the input records includes at least one of the additional recommended features.

In some cases, the causality discovery model is a directed weighted graph, wherein each node is associated with a respective feature of the features and each edge is associated with the influence between the nodes connected by the corresponding edge.

In accordance with a second aspect of the presently disclosed subject matter, there is provided a feature selection recommendation method, comprising: obtain, by a processing circuitry: (a) a training data-set, the training data-set comprising a plurality of records, each record including a collection of features describing a given allowed state of a physical entity, and (b) a selection of one or more selected features of the features; generate, by the processing circuitry, using a causality discovery model, for a plurality of pairs of the features of the training data-set, a respective causality score, the causality score being indicative of an influence between the features of the respective pair; identify, by the processing circuitry, additional recommended features, being one or more features that comply with a recommendation condition based on the plurality of pairs and the causality scores generated for the pairs; and provide, by the processing circuitry, a user of the feature selection recommendation system with an indication of the additional recommended features.

In some cases, the recommendation condition is one of: (A) that the additional recommended features are: (i) not one of the selected features, (ii) part of at least one given pair of the pairs wherein a first feature of the given pair is one of the selected features, and (iii) the causality score of the given pair is above a first threshold, (B) that the additional recommended features are: (i) not one of the selected features, (ii) part of two or more given pairs of the pairs wherein a first feature of the given pair is one of the selected features, (iii) the number of pairs of the given pairs having a causality score above a second threshold is above a third threshold, or (C) that the additional recommended features are: (i) not one of the selected features, (ii) part of two or more given pairs of the pairs wherein a first feature of the given pair is one of the selected features, (iii) the sum of the causality scores associated with pairs of the given pairs having a causality score above a fourth threshold is above a fifth threshold

In some cases, the user selects the selected features.

In some cases, the training data-set is used to train an anomaly detection model capable of detecting one or more anomalous records within a series of input records, wherein each of the input records includes at least one of the additional recommended features.

In some cases, the causality discovery model is a directed weighted graph, wherein each node is associated with a respective feature of the features and each edge is associated with the influence between the nodes connected by the corresponding edge.

In accordance with a third aspect of the presently disclosed subject matter, there is provided a non-transitory computer readable storage medium having computer readable program code embodied therewith, the computer readable program code, executable by processing circuitry of a computer to perform a feature selection recommendation method, comprising: obtain, by a processing circuitry: (a) a training data-set, the training data-set comprising a plurality of records, each record including a collection of features describing a given allowed state of a physical entity, and (b) a selection of one or more selected features of the features; generate, by the processing circuitry, using a causality discovery model, for a plurality of pairs of the features of the training data-set, a respective causality score, the causality score being indicative of an influence between the features of the respective pair; identify, by the processing circuitry, additional recommended features, being one or more features that comply with a recommendation condition based on the plurality of pairs and the causality scores generated for the pairs; and provide, by the processing circuitry, a user of the feature selection recommendation system with an indication of the additional recommended features.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Fig. 1** is a schematic illustration of exemplary causality structure between features, in accordance with the presently disclosed subject matter;
**Fig. 2** is a block diagram schematically illustrating one example of a system for feature selection recommendation, in accordance with the presently disclosed subject matter; and
**Fig. 3** is a flowchart illustrating one example of a sequence of operations carried out for a feature selection recommendation process, in accordance with the presently disclosed subject matter.

### DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "generating", "obtaining", "training", "identifying", "providing", "executing" or the like, include action and/or processes of a computer that manipulate and/or transform data into other data, said data represented as physical quantities, e.g., such as electronic quantities, and/or said data representing the physical objects. The terms "computer", "processor", "processing resource", "processing circuitry" and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g. digital signal processor (DSP), a microcontroller, a field programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

The operations in accordance with the teachings herein may be performed by a computer specially constructed for the desired purposes or by a general-purpose computer specially configured for the desired purpose by a computer program stored in a non-transitory computer readable storage medium. The term "non-transitory" is used herein to exclude transitory, propagating signals, but to otherwise include any volatile or nonvolatile computer memory technology suitable to the application.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

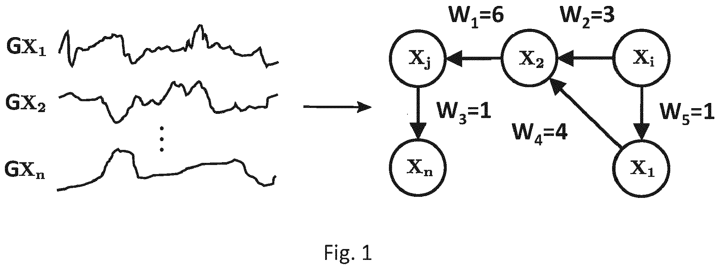

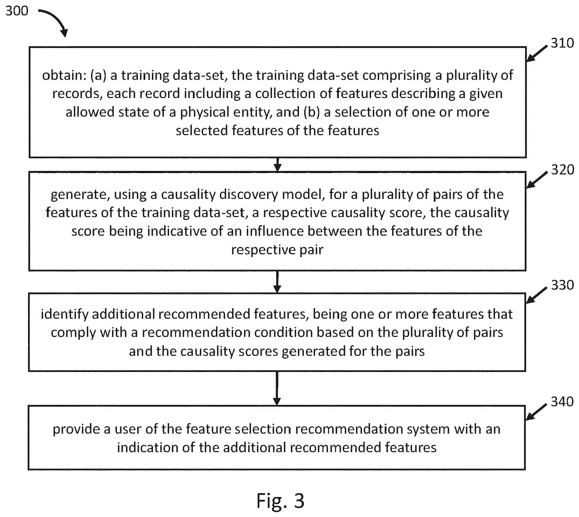

In embodiments of the presently disclosed subject matter, fewer, more and/or different stages than those shown in Fig. 3 may be executed. In embodiments of the presently disclosed subject matter one or more stages illustrated in **Fig. 3** may be executed in a different order and/or one or more groups of stages may be executed simultaneously. **Figs. 1-2** illustrate a general schematic of the system architecture in accordance with an embodiment of the presently disclosed subject matter. Each module in **Figs. 1-2** can be made up of any combination of software, hardware and/or firmware that performs the functions as defined and explained herein. The modules in **Figs. 1-2** may be centralized in one location or dispersed over more than one location. In other embodiments of the presently disclosed subject matter, the system may comprise fewer, more, and/or different modules than those shown in **Figs. 1-2****.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

Bearing this in mind, attention is drawn to Fig. 1, is a schematic illustration of exemplary causality structure between features, in accordance with the presently disclosed subject matter.

Machine learning models can be used to analyze and monitor signals originating from a system which represent variables of the system. A mapping of these signals are features (e.g., feature X₁, feature X₂, feature Xᵢ, feature Xⱼ, ..., feature Xₙ) associated with the system which are utilized by the machine learning module. An exemplary feature associated with the system can be a velocity feature of the system being the value of the velocity of the system as measured at given times. The series of values of the velocity is the signal read from the system for the given feature at the given times. The values can be discrete and/or continuous. Each feature can be represented by a feature values graph (e.g., feature values graph GX₁, feature values graph GX2, ..., feature values graph GXₙ), wherein the X axis of each feature values graph represents the times when the signal has been sampled or read from the system and the Y axis of the feature values graph represents the value of the signal at those given times.

The features can be analyzed in order to achieve various tasks, and specifically for signal integrity monitoring tasks by performing anomaly detection on the signals of the features read from the system. A non-limiting example of signal integrity monitoring is a problem in the domain of Vehicle Health Monitoring (VHM). In VHM, abnormal vehicle behavior is detected and diagnosed by detecting anomalies in observed signal (for example: by looking for unusual combination of signals and their temporal behavior).

A system can have numerus signals. In order for a signal integrity system to be efficient in anomaly detection of time series there is a need to detect causality relations between the signals and to monitor all signals having these causal relationships. This will allow an anomaly to manifest itself as a "broken temporal causality" between features.

Fig. 1 depicts an exemplary causality structure between graphs of feature values (e.g., feature values graph GX₁, feature values graph GX2, ..., feature values graph GXₙ) of the corresponding features (e.g., feature X₁, feature X₂, feature Xᵢ, feature Xⱼ, ..., feature Xₙ). The causality structure is a graph wherein at least some features of the features (e.g., feature X₁, feature X₂, feature Xᵢ, feature Xⱼ, ..., feature Xn) are the nodes of the graph and an edge between two nodes demonstrate a causality connection between the nodes of the edge. The edges of the graph can be weighted edges (e.g., weighted edge W₁, weighted edge W₂, weighted edge W₃, weighted edge W₄, weighted edge W₅). The weight of a given edge depicts a causality score between the features represented by the nodes connected to the given edge. The higher the causality score, the more causality exists between the features represented by the nodes connected to the given edge. The edge can be directed, wherein the direction of the edge is the direction of causality between the features represented by the nodes of the given edge.

The causality structure of the features (e.g., feature X₁, feature X₂, feature Xᵢ, feature Xⱼ, ..., feature Xn) can be generated using any causality discovery method, such as: casual bayes networks, casual inference, casual Markov conditions, D-separation, structural equation model, casual graph generation algorithms, statistical models, or any other causality structure generation method. In some cases, these methods can utilize the graphs of feature values (e.g., feature values graph GX₁, feature values graph GX2, ..., feature values graph GXₙ) for generating the causality structure of the features (e.g., feature X₁, feature X₂, feature Xᵢ, feature Xⱼ, ..., feature Xn) corresponding to the graphs of feature values (e.g., feature values graph GX₁, feature values graph GX2, ..., feature values graph GXₙ).

A non-limiting example of a CPS can be a vehicle. The features (e.g., feature X₁, feature X₂, feature Xᵢ, feature Xⱼ, ..., feature Xn) of the vehicle can be for example time series of: a brakes pedal pressure feature (e.g., feature X₂) being the pressure by which the brakes pedal of the vehicle is being pushed and a wheel rotation per minute feature (e.g., feature Xⱼ) being the number of Rounds Per Minute (RPM) the wheel of the vehicle turns by. The exemplary causality structure depicted in Fig. 1 shows a weighted edge W₁ between features X₂ and Xⱼ. The direction of the graph shows the direction of causality - pressing the brake pedals slows the RPM of the wheel. The causality score of these exemplary features is 6.

The causality score between the features (e.g., feature X₁, feature X₂, feature Xᵢ, feature Xⱼ, ..., feature Xn) represented by nodes connected to the given edge of the causality structure can be used for selection of signals to monitor for anomaly detection of a system, as further detailed herein, inter alia with reference to Fig. 3.

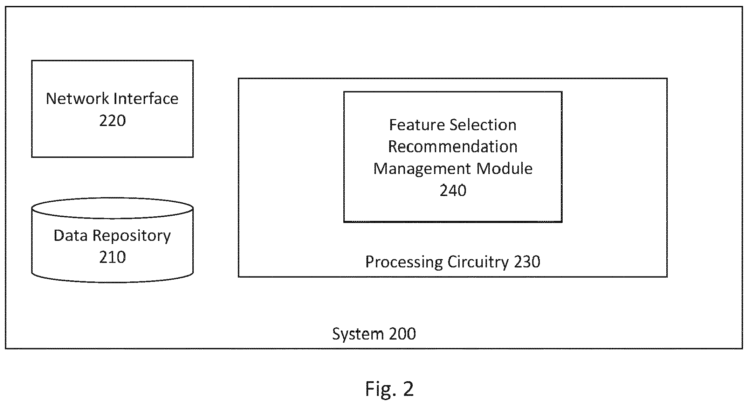

Having briefly described exemplary causality structures between features, attention is drawn to **Fig. 2****,** is a block diagram schematically illustrating one example of a system for feature selection recommendation, in accordance with the presently disclosed subject matter.

According to certain examples of the presently disclosed subject matter, system 200 can comprise a network interface 220 enabling connecting the system 200 to a network and enabling it to send and receive data sent thereto through the network, including in some cases receiving information such as: training data-sets, selection of one or more selected features, representation of signals time series, causality structures, etc. In some cases, the network interface 220 can be connected to a Local Area Network (LAN), to a Wide Area Network (WAN), or to the Internet. In some cases, the network interface 220 can connect to a wireless network. It is to be noted that in some cases the information, or part thereof, is transmitted to a user computing device.

System 200 can further comprise or be otherwise associated with a data repository 210 (e.g., a database, a storage system, a memory including Read Only Memory - ROM, Random Access Memory - RAM, or any other type of memory, etc.) configured to store data, including, inter alia, information of training data-sets, graphs of feature values (e.g., feature values graph GX₁, feature values graph GX2, ..., feature values graph GXₙ), causality structures and their respective features (e.g., feature X₁, feature X₂, feature Xᵢ, feature Xⱼ,..., feature Xn) and weighted edges (e.g., weighted edge W₁, weighted edge W₂, weighted edge W₃, weighted edge W₄, weighted edge W₅), etc.

In some cases, data repository 210 can be further configured to enable retrieval and/or update and/or deletion of the data stored thereon. It is to be noted that in some cases, data repository 210 can be distributed. It is to be noted that in some cases, data repository 210 can be stored in on cloud-based storage.

System 200 further comprises processing circuitry 230. Processing circuitry 230 can be one or more processing circuitry units (e.g., central processing units), microprocessors, microcontrollers (e.g., microcontroller units (MCUs)) or any other computing devices or modules, including multiple and/or parallel and/or distributed processing circuitry units, which are adapted to independently or cooperatively process data for controlling relevant system 200 resources and for enabling operations related to system 200 resources.

The processing circuitry 230 comprises a feature selection recommendation management module 240, configured to perform a feature selection recommendation management process, as further detailed herein, inter alia with reference to Fig. 3.

Turning to **Fig. 3****,** a flowchart illustrating one example of a sequence of operations carried out for a feature selection recommendation process, in accordance with the presently disclosed subject matter.

According to certain examples of the presently disclosed subject matter, system 200 can be configured to perform a feature selection recommendation management process 300, e.g., utilizing the feature selection recommendation management module 240.

System monitoring can be achieved utilizing machine-learning based monitors for analyzing signals read from the system. A user can provide a list of signals he wishes to monitor. System 200 can recommend additional signals to monitor based on causality scores between at least some of the signals of the system.

Monitoring produces outputs that measure a degree of normality or abnormality of signal behavior based on historical readings of the signal. An important type of anomaly is a collective anomaly wherein individual features (e.g., feature X₁, feature X₂, feature Xᵢ, feature Xⱼ, ..., feature Xn) behave normally, but jointly these features (e.g., feature X₁, feature X₂, feature X₁, feature Xⱼ, ..., feature Xₙ) are in anomalous configuration. Continuing our example above, a gear feature (e.g., feature X₁, feature X₂, feature Xᵢ, feature Xⱼ, ..., feature Xn) and a velocity feature (e.g., feature X₁, feature X₂, feature Xᵢ, feature Xⱼ, ..., feature Xn) of a given vehicle may be are normally behaving individually, but jointly are abnormal. For collective anomaly detection, a machine-learning model captures a relationship between features (e.g., feature X₁, feature X₂, feature Xᵢ, feature Xⱼ, ..., feature Xn) and measure the deviation from normal relationships. In order for the monitor to look at all signals that have a statistical relationship among them system 200 utilizes the causality discovery structure to recommend additional features (e.g., feature X₁, feature X₂, feature X₁, feature Xⱼ, ..., feature Xn) to be monitored. These features (e.g., feature X₁, feature X₂, feature Xᵢ, feature Xⱼ, ..., feature Xn) represent signals that influence other signals.

For this purpose, system 200 can be configured to obtain: (a) a training data-set, the training data-set comprising a plurality of records, each record including a collection of features (e.g., feature X₁, feature X₂, feature X₁, feature Xⱼ, ..., feature Xn) describing a given allowed state of a physical entity, and (b) a selection of one or more selected features (e.g., selected from feature X₁, feature X₂, feature Xᵢ, feature Xⱼ, ..., feature Xn) of the features (e.g., feature X₁, feature X₂, feature Xᵢ, feature Xⱼ, ..., feature Xn) (block 310). In some cases, a user of system 200 selects the selected features. For example, using a User Interface (UI) of system 200.

It is noted that the training data-set is used to train an anomaly detection model capable of detecting one or more anomalous records within a series of input records, wherein each of the input records includes at least one of the additional recommended features (e.g., feature X₁, feature X₂, feature Xᵢ, feature Xⱼ, ..., feature Xₙ).

System 200 can be further configured to generate, using a causality discovery model, for a plurality of pairs of the features (e.g., feature X₁, feature X₂, feature Xᵢ, feature Xⱼ, ..., feature Xn) of the training data-set, a respective causality score, the causality score being indicative of an influence between the features of the respective pair (block 320). In some cases, the causality discovery model is a directed weighted graph, wherein each node is associated with a respective feature of the features (e.g., feature X₁, feature X₂, feature Xᵢ, feature Xⱼ, ..., feature Xn) and each edge is associated with the influence between the nodes connected by the corresponding edge. In some cases, the edges are weighted edges (e.g., weighted edge W₁, weighted edge W₂, weighted edge W₃, weighted edge W₄, weighted edge W₅). The weight represents the causality score of the corresponding features (e.g., feature X₁, feature X₂, feature Xᵢ, feature Xⱼ, ..., feature Xₙ). In some cases, machine learning models can be used to analyze large sets of signals and generate the causality structure.

Continuing our non-limiting example above, the system is a vehicle. The features (e.g., feature X₁, feature X₂, feature Xᵢ, feature Xⱼ, ..., feature Xn) of the vehicle are: a brakes pedal pressure feature (e.g., feature X₂) being the pressure by which the brakes pedal of the vehicle is being pushed and a wheel rotation per minute feature (e.g., feature Xⱼ) being the number of Rounds Per Minute (RPM) the wheel of the vehicle turns by. The exemplary causality structure depicted in Fig. 1 shows a weighted edge W₁ between features X₂ and Xⱼ. The direction of the graph shows the direction of causality - pressing the brake pedals slows the RPM of the wheel. The causality score of these exemplary features is 6.

After generating the causality scores, system 200 is further configured identify additional recommended features (e.g., feature X₁, feature X₂, feature Xᵢ, feature Xⱼ, ..., feature Xn) that comply with a recommendation condition based on the plurality of pairs and the causality scores generated for the pairs. Non-limiting examples of complliacne with the recommendation condition is that the features are: (a) not one of the selected features, (b) part of at least one given pair of the pairs wherein a first feature of the given pair is one of the selected features, and (c) the causality score of the given pair is above a threshold (block 330).

The recommendation condition may be one of: (A) that the additional recommended features are: (i) not one of the selected features, (ii) part of at least one given pair of the pairs wherein a first feature of the given pair is one of the selected features, and (iii) the causality score of the given pair is above a first threshold; (B) that the additional recommended features are: (i) not one of the selected features, (ii) part of two or more given pairs of the pairs wherein a first feature of the given pair is one of the selected features, (iii) the number of pairs of the given pairs having a causality score above a second threshold is above a third threshold; or (C) that the additional recommended features are: (i) not one of the selected features, (ii) part of two or more given pairs of the pairs wherein a first feature of the given pair is one of the selected features, (iii) the sum of the causality scores associated with pairs of the given pairs having a causality score above a fourth threshold is above a fifth threshold.

Continuing our non-limiting example above, a user selects feature X₂ (brakes pedal pressure feature and system 200 suggests feature Xⱼ (the wheel rotation per minute feature) because it is connected in the exemplary casual structure depicted in Fig. 1 with an edge having a weight of 6 to feature X₂ as an additional recommended feature.

System 200 can now provide a user of the feature selection recommendation system with an indication of the additional recommended features (block 340). For example, the indication of the additional recommended features can be provided using the UI of system 200.

It is to be noted that, with reference to Fig. 3, some of the blocks can be integrated into a consolidated block or can be broken down to a few blocks and/or other blocks may be added. Furthermore, in some cases, the blocks can be performed in a different order than described herein. It is to be further noted that some of the blocks are optional (for example, block 340 can be an optional block). It should be also noted that whilst the flow diagram is described also with reference to the system elements that realizes them, this is by no means binding, and the blocks can be performed by elements other than those described herein.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the present presently disclosed subject matter.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

## Claims

1. A feature selection recommendation system, the feature selection recommendation system comprising a processing circuitry configured to:
obtain: (a) a training data-set, the training data-set comprising a plurality of records, each record including a collection of features describing a given allowed state of a physical entity, and (b) a selection of one or more selected features of the features;
generate, using a causality discovery model, for a plurality of pairs of the features of the training data-set, a respective causality score, the causality score being indicative of an influence between the features of the respective pair;
identify additional recommended features, being one or more features that comply with a recommendation condition based on the plurality of pairs and the causality scores generated for the pairs; and
provide a user of the feature selection recommendation system with an indication of the additional recommended features.

2. The feature selection recommendation system of claim 1, wherein the recommendation condition is one of:
(A) that the additional recommended features are: (i) not one of the selected features, (ii) part of at least one given pair of the pairs wherein a first feature of the given pair is one of the selected features, and (iii) the causality score of the given pair is above a first threshold,
(B) that the additional recommended features are: (i) not one of the selected features, (ii) part of two or more given pairs of the pairs wherein a first feature of the given pair is one of the selected features, (iii) the number of pairs of the given pairs having a causality score above a second threshold is above a third threshold, or
(C) that the additional recommended features are: (i) not one of the selected features, (ii) part of two or more given pairs of the pairs wherein a first feature of the given pair is one of the selected features, (iii) the sum of the causality scores associated with pairs of the given pairs having a causality score above a fourth threshold is above a fifth threshold.

3. The feature selection recommendation system of claim 1, wherein the user selects the selected features.

4. The feature selection recommendation system of claim 1, wherein the training data-set is used to train an anomaly detection model capable of detecting one or more anomalous records within a series of input records, wherein each of the input records includes at least one of the additional recommended features.

5. The feature selection recommendation system of claim 1, wherein the causality discovery model is a directed weighted graph, wherein each node is associated with a respective feature of the features and each edge is associated with the influence between the nodes connected by the corresponding edge.

6. A feature selection recommendation method, comprising:
obtain, by a processing circuitry: (a) a training data-set, the training data-set comprising a plurality of records, each record including a collection of features describing a given allowed state of a physical entity, and (b) a selection of one or more selected features of the features;
generate, by the processing circuitry, using a causality discovery model, for a plurality of pairs of the features of the training data-set, a respective causality score, the causality score being indicative of an influence between the features of the respective pair;
identify, by the processing circuitry, additional recommended features, being one or more features that comply with a recommendation condition based on the plurality of pairs and the causality scores generated for the pairs; and
provide, by the processing circuitry, a user of the feature selection recommendation system with an indication of the additional recommended features.

7. The feature selection recommendation method of claim 6, wherein the recommendation condition is one of:
(A) that the additional recommended features are: (i) not one of the selected features, (ii) part of at least one given pair of the pairs wherein a first feature of the given pair is one of the selected features, and (iii) the causality score of the given pair is above a first threshold,
(B) that the additional recommended features are: (i) not one of the selected features, (ii) part of two or more given pairs of the pairs wherein a first feature of the given pair is one of the selected features, (iii) the number of pairs of the given pairs having a causality score above a second threshold is above a third threshold, or
(C) that the additional recommended features are: (i) not one of the selected features, (ii) part of two or more given pairs of the pairs wherein a first feature of the given pair is one of the selected features, (iii) the sum of the causality scores associated with pairs of the given pairs having a causality score above a fourth threshold is above a fifth threshold.

8. The feature selection recommendation method of claim 6, wherein the user selects the selected features.

9. The feature selection recommendation method of claim 6, wherein the training data-set is used to train an anomaly detection model capable of detecting one or more anomalous records within a series of input records, wherein each of the input records includes at least one of the additional recommended features.

10. The feature selection recommendation method of claim 6, wherein the causality discovery model is a directed weighted graph, wherein each node is associated with a respective feature of the features and each edge is associated with the influence between the nodes connected by the corresponding edge.

11. A non-transitory computer readable storage medium having computer readable program code embodied therewith, the computer readable program code, executable by processing circuitry of a computer to perform a feature selection recommendation method, comprising:
obtain, by a processing circuitry: (a) a training data-set, the training data-set comprising a plurality of records, each record including a collection of features describing a given allowed state of a physical entity, and (b) a selection of one or more selected features of the features;
generate, by the processing circuitry, using a causality discovery model, for a plurality of pairs of the features of the training data-set, a respective causality score, the causality score being indicative of an influence between the features of the respective pair;
identify, by the processing circuitry, additional recommended features, being one or more features that comply with a recommendation condition based on the plurality of pairs and the causality scores generated for the pairs; and
provide, by the processing circuitry, a user of the feature selection recommendation system with an indication of the additional recommended features.
